# EUROPEAN PATENT APPLICATION

(11) **EP 4 575 422 A1**
(43) Date of publication of application: **25.06.2025**
(21) Application number: 23218292.3
(22) Date of filing: 19.12.2023
(51) Int. Cl.: G01G 19/00, B60D 1/62

(54) **LONGITUDINAL DRAWBAR SUSPENSION**

(71) Applicant: VOLVO TRUCK CORPORATION, 405 08 Göteborg (SE)
(72) Inventor: MÖLLER, Daniel, 416 81 GÖTEBORG (SE); GELSO, Esteban, 421 51 VÄSTRA FRÖLUNDA (SE); HANSSON, Johan, 411 31 GÖTEBORG (SE); SADEGHI KATI, Maliheh, 433 51 ÖJERSJÖ (SE)
(74) Representative: Kransell & Wennborg KB

(57) **Abstract**

A drawbar (210) for coupling of two vehicle units of a heavy road vehicle combination (400) is provided. The drawbar includes a first end section (220) mountable to a first vehicle unit, and a second end section (230) couplable to a second vehicle unit. The drawbar further includes a suspension element (240) connecting the first and second end sections such that they are relatively movable in a longitudinal direction (L) of the drawbar, wherein the drawbar is configured to provide damping of such relative movement. The suspension element may be an active suspension element controlled (254) by a control unit (250). A corresponding control unit (250), drawbar arrangement (200), heavy vehicle trailer, heavy towing vehicle and heavy vehicle combination are also provided.

## Description

### TECHNICAL FIELD

The disclosure relates generally to the field of vehicle stability. In particular aspects, the disclosure relates to stability for heavy vehicles, such as for a truck pulling a trailer using a drawbar. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When pulling a trailer, a truck is subjected to various so-called coupling forces at its coupling point, i.e. a point at which the trailer connects to the truck. In many situations, it may be desirable to handle the vehicle combination in a way which reduces, and perhaps even eliminates, such coupling forces.

However, even under normal driving conditions, maintaining the coupling forces to a minimum can be difficult, and chock-like behavior may occur as a result of abrupt fluctuations in the forces acting between the truck and trailer, in particular on uneven road surfaces and/or when changing between uphill and downhill gradients. Even on level road surfaces, fluctuating coupling forces can also be induced by repeated braking and acceleration of the vehicle combination, such as when e.g. shifting gears. In addition to causing discomfort to the driver and additional wear on the various components of the vehicle combination, such coupling forces may under certain circumstances also be dangerous and result in in e.g. jack-knifing if not properly compensated for. Having a good knowledge about the existing coupling forces, such as force magnitude and also direction, is thus beneficial, as e.g. braking of the vehicle combination could be adjusted such that both the truck and trailer are braked at equal brake rates.

The present disclosure aims at facilitating the handling of a vehicle combination and reduce the negative effects of fluctuating coupling forces.

### SUMMARY

According to a first aspect of the present disclosure, there is provided a drawbar for coupling (together) of two vehicle units of a heavy road vehicle combination. The drawbar includes a first end section mountable to a first vehicle unit of the vehicle units, and a second end couplable to a second vehicle unit of the vehicle units. The drawbar further includes a suspension element connecting the first and second vehicle end sections such that the first and second end sections are at least partially movable relative to each other along a longitudinal direction of extension of the drawbar. The suspension element is configured to provide damping of such relative movement. The first aspect of the present disclosure may seek to improve the handling of such a vehicle combination. A technical benefit may include that the suspension element may e.g. help to reduce the risk of jack-knifing, and/or that sensing of a force exerted by the first vehicle unit (on the drawbar) based on a state of the suspension element may provide useful information about the various coupling forces of the vehicle combination, such that the vehicle combination can be actively controlled based on such force information.

Optionally, in some examples, including in at least one preferred example, of the drawbar, the suspension element may be an active suspension element in the form of an air suspension, gas-hydraulic suspension, magneto-rheological suspension and/or hydraulic suspension. A technical benefit may include that the active suspension element can be actively controlled to further improve the handling of the vehicle combination.

Optionally, in some examples, including in at least one preferred example, of the drawbar, the drawbar may further include one or more sensors configured to sense a state of the suspension element indicative of a force exerted by the first vehicle unit (on e.g. the drawbar). The drawbar may be connectable to a control unit to provide readouts from the one or more sensors. A technical benefit may include that the control unit may then use the sensed force as part of controlling the vehicle combination, e.g. based on knowledge about the coupling forces obtained via the suspension element.

According to a second aspect of the present disclosure, there is provided a control unit for a heavy road vehicle combination. The control unit is (via e.g. processing circuitry thereof) configured to obtain readouts from one or more sensors configured to sense a state of a suspension element of a drawbar coupling together a first vehicle unit and a second vehicle unit of the vehicle combination. The state is indicative of a longitudinal force exerted by the first vehicle unit (on e.g. the drawbar). The control unit is further configured to control the vehicle combination based on the readouts of the one or more sensors. A technical benefit may include that such active control of the vehicle combination can utilize knowledge about coupling forces between vehicle units obtained via the drawbar.

Optionally, in some examples, including in at least one preferred example, of the control unit, the control unit may be further configured to, as part of controlling the vehicle combination, control braking and/or propulsion of the vehicle combination based on the readouts from the one or more sensors. A technical benefit may include that this may further improve the handling of the vehicle, by using the braking and/or propulsion to react to e.g. undesirable coupling forces obtained via the drawbar.

Optionally, in some examples, including in at least one preferred example, of the control unit, the control unit may be further configured to obtain an indication of an articulation angle between the first and second vehicle units and, as part of controlling the vehicle combination, control the braking and/or propulsion of the vehicle combination based also on the articulation angle. A technical benefit may include that the articulation angle may reveal information about exactly the drawbar exerts force on the second vehicle unit, forces that are transferred by the drawbar from the first vehicle unit.

Optionally, in some examples, including in at least one preferred example, of the control unit, the control unit may be further configured to detect an imminent jack-knifing situation based on readouts of the one or more sensors and, as part of controlling the vehicle combination, prepare the vehicle combination to avoid or at least alleviate the j ack-knifing situation during a delay of a force exerted on the second vehicle unit by the drawbar and caused by the suspension element. Phrased differently, there may be a delay between a force being exerted on the drawbar by the first vehicle unit and the drawbar transferring (all or part of) such a force to the second vehicle unit, which may give the control unit more time to prepare for and handle the situation.

Optionally, in some examples, including in at least one preferred example, of the control unit, the suspension element may be an active suspension element, and the control unit may be further configured to cause or extend the (time) delay be commanding a compression or elongation of the active suspension element.

Optionally, in some examples, including in at least one preferred example, of the control unit, the suspension element may be an active suspension element, and the control unit may be further configured to, in response to determining that a current or predicted future speed of the vehicle combination exceeds a speed threshold, control the active suspension element to reduce an overall longitudinal length of the drawbar for thereby bringing the first and second vehicle units closer together. A technical benefit may be that such control may help to e.g. improve efficiency in terms of fuel consumption and similar while driving a higher speeds.

Optionally, in some examples, including in at least one preferred example, of the control unit, the suspension element may be an active suspension element, and the control unit may be configured to obtain data indicative of one or more current or upcoming corners of a road to be driven along by the vehicle combination, and to control the active suspension element to adjust an overall longitudinal length of the drawbar in order to improve cornering of the vehicle combination in the one or more current or upcoming corners. A technical benefit may include that such control may improve the overall handling of the vehicle combination.

Optionally, in some examples, including in at least one preferred example, of the control unit, the control unit may be further configured to estimate a regenerative braking force capacity of the vehicle combination based on the readouts of the one or more sensors of the drawbar. A technical benefit may include that such knowledge may help to better plan how to use the regenerative braking to e.g. improve efficiency and reduce net energy consumption.

Optionally, in some examples, including in at least one preferred example, of the control unit, the control unit may be further configured to determine or predict current or future longitudinal oscillatory relative movements between the first and second vehicle units, and to control the active suspension element to counteract such oscillatory movements. A technical benefit may include that the overall handling of the vehicle combination can be improved and also the overall safety, as such oscillations could otherwise result in a dangerous driving situation.

Optionally, in some examples, including in at least one preferred example, of the control unit, the first vehicle unit may be an e-trailer, and the control unit may be further configured to reduce a magnitude of the force exerted by the e-trailer by distributing acceleration requests between the e-trailer and the second vehicle unit. A technical benefit may include that coupling forces may be reduced.

According to a third aspect of the present disclosure, there is provided a drawbar arrangement for a heavy road vehicle combination. The drawbar arrangement includes the drawbar of the first aspect (or any example thereof), the control unit of the second aspect (or any example thereof), and one or more sensors configured to sense a state of the suspension element of the drawbar indicative of a force exerted by the first vehicle unit.

According to a fourth aspect of the present disclosure, there is provided a heavy vehicle trailer, including the drawbar of the first aspect (or any examples thereof).

According to a fifth aspect of the present disclosure, there is provided a heavy towing vehicle including the control unit of the second aspect (or any examples thereof).

According to a sixth aspect of the present disclosure, there is provided a heavy vehicle combination, including a first vehicle unit, a second vehicle unit, the control unit of the second aspect (or any example thereof), and the drawbar arrangement of the third aspect (or any example thereof) for coupling together the first and second vehicle units.

Optionally, in some examples, including in at least one preferred example, of the vehicle combination, the control unit may form part of the second vehicle unit, such as of a heavy towing vehicle (such as that of the fifth aspect).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically illustrates an exemplary trailer and drawbar according to contemporary technology.
**FIG. 2** schematically illustrates an exemplary drawbar and drawbar arrangement according to examples of the present disclosure.
**FIG. 3** schematically illustrates an exemplary trailer according to an example.
**FIGS. 4A and 4B** schematically illustrate exemplary towing vehicles, trailers and vehicle combinations according to examples.
**FIG. 5** schematically illustrates an exemplary control unit according to an example.
**FIG. 6** schematically illustrates a diagram of an exemplary computer system for implementing examples disclosed herein, according to an example.
**FIG. 7** schematically illustrates a flowchart of an exemplary method according to an example.

### DETAILED DESCRIPTION

The detailed description set forth below provides information and examples of the disclosed technology with sufficient detail to enable those skilled in the art to practice the disclosure.

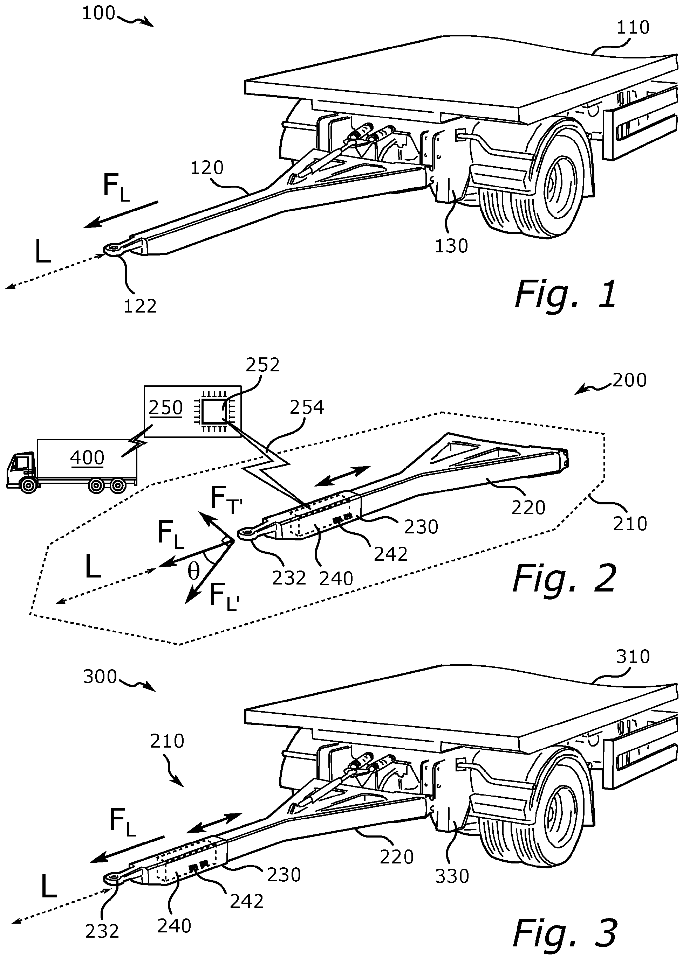

**FIG. 1** schematically illustrates an example of a contemporary trailer 100 and drawbar 120 for a heavy vehicle combination. The drawbar 120 is connectable to a drawbar coupler of e.g. a towing vehicle (such as a truck) using a coupling ring 122. The drawbar 120 connects to a front wheel axle assembly 130, that is in turn rotatably mounted to a body 110 of the trailer 100, in order to make the trailer 100 easier to turn. In some examples, the front wheel axle assembly 130 may also be rigidly (i.e. non-rotatably) mounted to the body 100, which may be sufficient if e.g. the trailer 100 is short enough to turn without too much effort.

A trailer such as 100 will exert a force *F_{L}* in a longitudinal direction L of extension of the drawbar 120, on e.g. a coupling point between the trailer 100 and the towing vehicle. As mentioned earlier herein, such a coupling force (or coupling forces, if considering e.g. longitudinal and lateral components of *F_{L},* with respect to the towing vehicle) may cause discomfort for the driver and also additional wear on various vehicle components. In addition, if the coupling force is strong and not only in the longitudinal direction of the towing vehicle, the vehicle combination may also become unstable, for example by causing jack-knifing of the towing vehicle and towed trailer 100 when the trailer 100 pushes too hard on the towing vehicle via the drawbar 120.

How the present disclosure further develops such contemporary technology and at least partially alleviates such problems thereof will now be described in more detail with reference to FIGS. 1, 2, 3, 4A, 4B, 5, 6 and 7.

**FIG. 2** schematically illustrates an exemplary drawbar 210 for coupling of two vehicle units of a vehicle combination according to examples of the present disclosure. The drawbar 210 has a first end section 220 with which the drawbar 210 is mountable to a first vehicle unit (such as a e.g. a trailer), e.g. to a front wheel axle assembly or similar. The drawbar 210 and the first end section 220 may be such that when mounted to the first vehicle unit, the drawbar may pivot around an axis perpendicular to the longitudinal direction L, i.e. around an axis parallel with the wheel axle(s) of the first vehicle unit. This may for example be useful when driving over hills, in valleys, or any time that a longitudinal axis of the second vehicle unit is not parallel with a longitudinal axis of the first vehicle unit (if both projected on e.g. a vertical plane). In other examples, the first end section 220 may be such that the drawbar 210 is rigidly mounted to the first vehicle unit and not pivotable around any axle. Likewise, it is envisaged that the drawbar 210 and the first end section 220 is mountable to a turnable wheel axle arrangement (i.e. rotatable around a vertical axis), or e.g. to a wheel axle arrangement that is fixed and not turnable, or e.g. to some part of the first vehicle unit that is not a wheel axle arrangement. In particular, it should be noted that the drawbar 210 as envisaged herein can also be used to connect a towing vehicle, or a trailer, to something which is not usually considered to be a trailer, such as e.g. a dolly wagon or similar, or to any entity towable as part of vehicle combination. As used herein, however, all such entities will be included in the meaning of the expression "trailers".

The drawbar 210 further includes a second end section 230 with which the drawbar 210 is couplable to a second vehicle unit of the vehicle combination (such as a towing vehicle, or e.g. another trailer, or similar). The second end section may e.g. include a towing ring 232 to connect the drawbar 210 and second end section 230 to a drawbar/ring coupler of the second vehicle unit, and similar.

In particular, the first and second end sections 220 and 230 are not directly fastened to each other. Instead, the two end sections 220 and 230 are connected via a suspension element 240 that is also provided as part of the drawbar 210. The drawbar 210 extends along the longitudinal direction L, and the first and second end sections 220 and 230 are thus movable relative each other in this direction L but ultimately held together via the suspension element 240. The suspension element 240 provides a damping of the relative movement of the two end sections 220 and 230 in the longitudinal direction L. For example, an inside of the second end section 230 may be hollow such that at least part of the first end section 220 is received inside the second end section 230, and such that the part of the first end section 220 received inside the second end section 230 may move at least partially relative the second end section 230 in the longitudinal direction L, or vice versa. Preferably, the two end sections 220 and 230, as well as the suspension element 240, are such that they do not (substantially) allow any relative movement of the two end sections 220 and 230 other than in the longitudinal direction L, such that the addition of the suspension element 240 and splitting of the drawbar 210 into two distinct sections 220 and 230 does not cause any further pivoting joint.

As envisaged herein, the suspension element 240 is an element providing spring action as well as damping action, such as e.g. a coil-sprung or air-sprung hydraulic suspension, or similar. As also envisaged herein, in other examples, the suspension element 240 can be an active suspension element, such as e.g. an air-spring wherein the amount of air within e.g. an air bellow is dynamically adjustable, a gas-hydraulic suspension, a magneto-rheological suspension or e.g. an active hydraulic suspension, or any other suitable active suspension which allow to dynamically control one or more of its properties during use. For example, in an air-spring, the spring action may be provided by compression/decompression of air within an air bellow, and damping may be provided by throttling of an air flow in or out of the air bellow, and similar. It is noted that the term "suspension" is here used for an element providing e.g. damping and/or shock-absorption in the longitudinal direction and has nothing to do with e.g. suspension of wheel units or similar, although an element such as the suspension element 240 could potentially also be used in such wheel unit suspension. The suspension element 240 may alternatively be referred to as a "deformable element", "a longitudinally deformable element", a "shock-absorbing element", "a spring and/or damper element", etc.

The drawbar 210 further includes, in this particular example, one or more sensors 242 that are configured to sense a state of the suspension element 240 indicative of (a magnitude of) a force *F_{L}* exerted by the first vehicle unit (e.g. trailer, on e.g. the second vehicle unit in form of e.g. a towing truck or other trailer). For example, if the suspension element 240 is passive, such sensors may e.g. measure/detect a compression/elongation of a spring included as part of the suspension element 240, measure/detect a relative displacement of the first and second end sections 220 and 230 in the longitudinal direction L, measure a pressure within the suspension element, or perform any other measurements suitable for deriving at least a magnitude of the force *F_{L}.* For example, if the suspension element 240 is an (active) air spring or gas-hydraulic suspension, the one or more sensors 240 may be configured to measure a pressure within the air bellow, within one or more conduits routing air to or from the air bellow, or similar.

In other examples, the one or more sensors 242 are not necessarily provided as part of the drawbar 210, but may instead be provided elsewhere, such as part of a system responsible for providing air to/from an air spring or similar, which can e.g. form part of a towing vehicle instead of the trailer, and similar, e.g. as part of the second vehicle unit.

The drawbar is, at least as long as the one or more sensors 242 form part of the drawbar 210 itself, connectable to a control unit 250 in order to provide readouts of the one or more sensors 242. Herein, "connectable" may include both wired and/or wireless connections 254, i.e. the drawbar may be connectable to the control unit 250 using physical wires, or be configured to communicate with the control unit 250 using e.g. radio waves or any other form of electromagnetic radiation, such as light. The control unit 250 may in turn, using e.g. processing circuitry 252 included as part of the control unit 250, be configured to control a vehicle combination 400 including the first and second vehicle units based on the readouts of the one or more sensors 240, and i.e. based on the indicated force *F_{L}* exerted by the first vehicle unit. Controlling the vehicle combination 400 may e.g. include controlling a propulsion and/or braking of the vehicle combination 400, i.e. to control one or more motion support devices (MSDs) of the vehicle combination 400, in order to e.g. reduce coupling forces, and similar. In some examples, the control unit 250 may form part of the drawbar 210 itself, and it may e.g. be envisaged that the control unit 250 of the drawbar 210 may then be connectable to e.g. a towing vehicle in order to e.g. cooperate with a control system/unit of the towing vehicle, in order to control e.g. the braking and/or propulsion of at least the towing vehicle, and/or be connectable to one or more control systems/units of one or more other trailers forming part of the vehicle combination.

By providing damping of the relative movement between the first and second end sections 220 and 230 in the longitudinal direction L, the envisaged drawbar 210 may help to alleviate at least some of the above-mentioned problems of contemporary drawbar solutions (such as the one 100 shown in FIG. 1). In addition, by making use of the readouts of the one or more sensors 240 and thereby the knowledge about the force *F_{L}* exerted by the first vehicle unit, the control unit 250 may further help to improve a driving experience of the vehicle combination, including to reduce component wear caused by shock-like forces and/or oscillations between a trailer and e.g. towing vehicle.

As used herein, it is noted that a "force exerted by the first vehicle unit on the drawbar" may not necessarily be a same force as a force exerted on the second vehicle unit by the drawbar, due to the presence of the suspension element 240, and e.g. that there may be an articulation angle between the first and second vehicle units. More importantly, as will be described in more detail later herein, even with no articulation angle there may be a delay in time between a force between exerted on the drawbar by the first vehicle unit and a resulting force being exerted on the second vehicle unit by the drawbar, due to e.g. compression and/or elongation of the suspension element. Phrased differently, there may be a difference between one or more forces that the first and second vehicle units "want" to exert on each other and the actual forces that are experienced by the respective first and second vehicle unit.

FIG. 2 further serves to also illustrate an exemplary drawbar arrangement 200 according to examples of the present disclosure. The drawbar arrangement 200 includes the drawbar 210 and the control unit 250. As mentioned earlier herein, the one or more sensors 242 may or may not be included as part of the drawbar 210 itself, but are at least included as part of the drawbar arrangement 200.

In some examples (of e.g. the drawbar arrangement 200), knowledge about an articulation angle *θ* (as indicated in FIG. 2), i.e. an angle between the longitudinal direction L and a longitudinal direction of the second vehicle unit can be obtained, using e.g. one or more suitable sensors. For example, such sensors may be provided as part of the drawbar coupler, as part of the drawbar 210 (e.g. as part of the suspension element 240), or similar. Such sensors may e.g. include angular sensors, or e.g. one or more cameras and image processing devices in order to visually estimate the angle between the two longitudinal directions. For example, *θ* may be defined as the angle in a horizontal plane. If the longitudinal directions are also angled in e.g. a vertical plane, an additional coupling angle, such as *ϕ*, may be introduced to describe such an additional articulation angle. For the present example, it will be assumed that *θ* is the angle in a horizontal plane, and e.g. indicates an angular difference between the longitudinal directions of the first and second vehicle units in the horizontal plane. Based on *θ* and knowledge about the force *F_{L},* the resulting force exerted by the drawbar on the second vehicle unit may be decomposed into a longitudinal component *F_{L'}* and a lateral component *F_{T'}* as seen by the second vehicle unit. Phrased differently, the component *F_{L'}* corresponds to how much of the force *F_{L}* that is applied in the longitudinal direction of the second vehicle unit, and the component *F_{T'}* corresponds to how much of the force *F_{L}* that is applied in the lateral/transverse direction of the second vehicle unit. The articulation angle *θ* may be determined (or obtained) by the control unit 250, and used (in addition to the readouts from the one or more sensors 242) as part of controlling the vehicle combination 400.

**FIG. 3** schematically illustrates an exemplary first vehicle unit in form of a trailer 300 according to examples of the present disclosure. The trailer includes a body 310, a front wheel axle assembly 330, and the drawbar 210 mounted with its first end section 220 to the front wheel axle assembly 330. The front wheel axle assembly 330 may or may not be turnable, and in other examples the drawbar 210 and its first end section 220 may be connected to some other part of the trailer 300 than the front wheel assembly 330. The drawbar 210 may be rigidly or pivotably connected to the body 310 of the trailer 300. In other examples, the trailer 300 may include the full drawbar assembly 200 illustrated in FIG. 2. Herein, "trailer" does not exclude that the drawbar is provided as part of e.g. a dolly wagon or something similar which in turns connect to a proper trailer, such as a semitrailer or similar using a fifth-wheel coupler. As used herein, "trailer" is any vehicle unit of a vehicle combination that is coupled/connected to e.g. a towing vehicle or any other unit of the vehicle combination, and which includes the envisaged drawbar 210 or drawbar arrangement 200 for such coupling/connection.

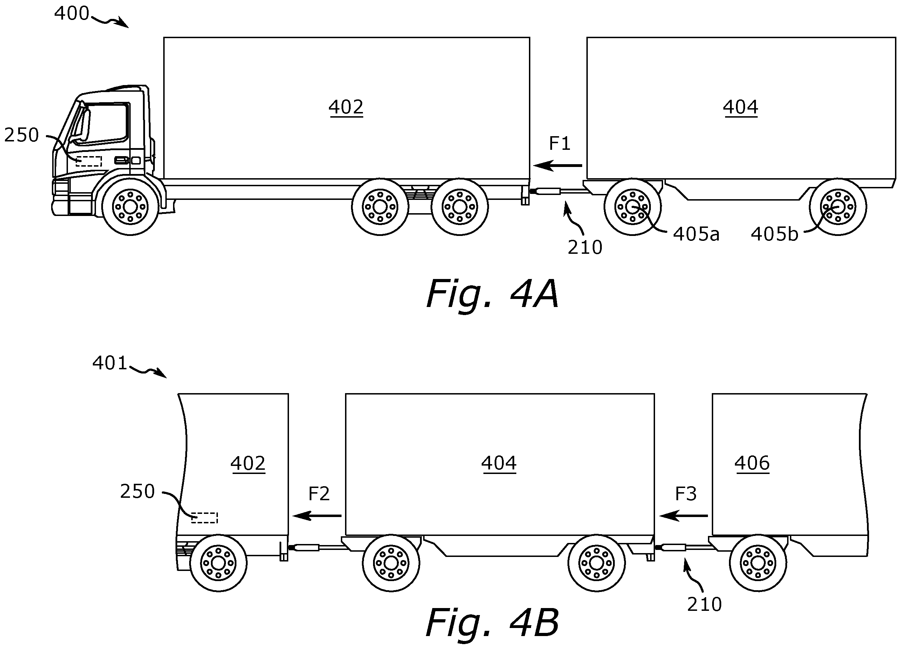

**FIG. 4A** schematically illustrates an exemplary vehicle combination 400 according to examples of the present disclosure. The vehicle combination 400 includes a second vehicle unit 402 in form of a truck, and a first vehicle unit 404 in form of a trailer. The trailer 404 is coupled to the towing vehicle 402 via a drawbar 210 as envisaged herein, and the force exerted by the trailer 404 is denoted F1. In this particular example, the control unit 250 is provided as part of the towing vehicle 402 (i.e. as part of the second vehicle unit), but may just as well be provided as part of any other unit, or provided as distributed between units, of the vehicle combination 400. The trailer 404 is shown as having two wheel axles 405a and 405b that may or may not be driven axles. For example, it is envisaged that at least one of the axles 405a and 405b may be a driven axle, propelled by e.g. one or more electrical machines, in which case the first vehicle unit/trailer 404 may be referred to as an "e-trailer", or similar.

**FIG. 4B** schematically illustrates another exemplary vehicle combination 401 according to examples of the present disclosure. Here, a trailer 404 is connected to a towing vehicle 402 and exerts a force *F*2, and another trailer 406 is connected to the trailer 404 and exerts a force *F*3. The trailer 406 here corresponds to a first vehicle unit, and the trailer 404 here corresponds to a second vehicle unit, of the vehicle combination 401. The trailer 406 is thus connected to another trailer 404 of the vehicle combination and not (directly) to the towing vehicle 402, using the drawbar 210 as envisaged herein. The control unit 250 is shown as being part of the towing vehicle 402, but may of course be provided as part of some other unit, or distributed among units, of the vehicle combination 401. Although not shown, the coupling of the trailer 404 to the towing vehicle 402 may of course also be provided with a drawbar as envisaged herein.

As generally used herein, a "vehicle combination" is a heavy road vehicle combination, including e.g. a truck towing one or more trailers, a bus towing one or more trailers, and similar. The vehicle combination is not e.g. a train configured to drive on rails/tracks (i.e. a railed vehicle combination), a marine vessel, or similar. With "road" vehicle combination, it is however also envisaged vehicle combinations capable of driving off-road, e.g. outside of a dedicated road having e.g. a well defined tarmac, gravel, etc., surface. In general, such other vehicles (such as trains and/or marine vessels) do not suffer from risks of e.g. jack-knifing in the way road vehicles do.

Various examples of how the control unit 250 may control the vehicle combination 400 based on the readouts of the one or more sensors 240 (and e.g., in some examples, also based on the articulation angle *θ*), to improve a driving experience of the vehicle combination (e.g. 400) will now be described in more detail.

In one example, the longitudinal and lateral (transverse) forces *F_{L'}* and *F_{T'}* (as illustrated in FIG. 2) exerted on the second vehicle unit may be obtained and used to control the braking and/or propulsion (i.e. MSDs) of the vehicle combination such that at least one vehicle unit of the vehicle combination stays within one or more tire slip limitations. Phrased differently, by knowledge about with how much longitudinal and lateral force the drawbar 210 is pushing on the second vehicle unit 404 (due to a force being exerted on the drawbar 210 by the first vehicle unit 404), it may be determined what braking and/or propulsion that may be applied without causing extensive tire/wheel slip. The various tire slip limitations may e.g. be calculated using a friction circle, and/or wheel slip may be monitored and controlled via e.g. speed control of the wheel.

In one example, knowledge about the force exerted by the first vehicle unit/trailer 404 on e.g. the second vehicle unit/towing vehicle 402 may be used to detect that an imminent jack-knifing situation is imminent if no further action is taken. By utilizing a (time-)delay before a force exerted on the drawbar 210 by the trailer 404 is transferred as a force exerted on the towing vehicle 402 by the drawbar, as caused by the suspension element 240 providing e.g. damping and/or spring action therein between, the control unit 250 is provided with additional time in which it can determine the proper action (i.e. suitable control of the vehicle combination, such as attempting to straighten the combination by reducing any articulation angle between the first and second vehicle units, etc.) to take in order to avoid or at least alleviate such a j ack-knifing situation. Such a time-delay can be caused by a compression (or elongation) of the suspension element 240. In particular, if the suspension element 240 is an active suspension element, the control unit 250 may actively cause (i.e. command) the active suspension element 240 to compress (or elongate) in order to cause or even extend such a time-delay, in order to postpone the impact of the trailer 404 on the towing vehicle 402 (via the drawbar 210) sufficiently to make the vehicle combination 400 ready to prevent or at least reduce an impact of such j ack-knifing. If the active suspension 240 is e.g. an active air suspension, the time-delay can be created or extended by e.g. the control unit 250 commanding air to be releasable from an air-bellow (to cause compression due to the force exerted on the drawbar by the trailer 404). Here, that the suspension element 240 can be elongated to cause the time-delay is meant to illustrate that the suspension element 240 is not necessarily provided such that it is compressed if the first and second end sections 220 and 230 of the drawbar 210 are moved closer together in the longitudinal direction L, as it may just as well, at least in some situations, be possible to provide the suspension element 240 such that instead elongates as a result of such relative movement of the first and second end sections 220 and 230, and vice versa. If the suspension element 240 is not active but passive, it is envisaged that at least some time-delay may still be caused by compression (or elongation) of the passive suspension element 240, such as by compression of a spring (shock absorber) or similar. Detecting that a jack-knifing situation is (possibly) imminent may be performed by the control unit 250 detecting that e.g. the indicated force exerted by the trailer 404 on the drawbar 210 exceeds a particular force threshold value, or e.g. that a rate of change of the indicated force exceeds a rate of change threshold value, or similar. The control unit 250 may also take into account e.g. the articulation angle *θ* in order to determine whether a jack-knifing situation is imminent, or similar. The control unit 250 may also, in some examples, for example be configured to obtain information about e.g. current grips of tires of the vehicle combination, grip margins, road surface conditions, etc., and/or about other parameters that may be relevant to determining whether a j ack-knifing situation is imminent or not. A magnitude of the force exerted by the trailer 404 may e.g. be estimated by measuring a pressure within the suspension element 240 (if it is e.g. based on hydraulics and/or air), by measuring a displacement of the first and second end sections 220 and 230 in the longitudinal direction L, or e.g. by measuring a compression/elongation of the suspension element 240 itself. Another possible example includes to e.g. use a simple switch to indicate once the suspension element 240 (and/or the relative displacement between the first and second end sections 220 and 230) is more than sufficient to believe that a jack-knifing situation is possibly imminent. Other solutions are of course also envisaged. Avoiding or alleviating a jack-knifing situation may e.g. include braking of the vehicle combination 400 in a particular way, slowing down the vehicle combination 400 in a particular way, attempting to steer the towing vehicle, and/or a combination of all such options, as can be calculated by the control unit 250. Even if the delay in force-transfer that is caused by the suspension element 240 is small, such a small delay may still be sufficient to improve the odds of the control unit 250 being able to control the vehicle combination 400 to at least partially reduce the negative consequences of a j ack-knifing situation.

In one example, if the vehicle combination 400 (such as the towing vehicle 402) may be equipped with a regenerative braking system, the control unit 250 may use the estimated force exerted by the trailer 404 (as found based on the readouts of the one or more sensors 242) in order to estimate how much regenerative force e.g. the towing vehicle 402 can brake with, i.e. to estimate a regenerative braking force capacity.

In one example, the control unit 250 may be configured to determine whether a current or predicted speed of the vehicle combination 400 (such as based on satellite data, speedometer data or other sensory data indicative of such speed) exceeds or is going to exceed a speed threshold. If affirmative, the control unit 250 may control the (active) suspension element 240 to reduce an overall length of the drawbar 210 in the longitudinal direction L, to thereby pull the trailer 404 closer to the towing vehicle 402, and thereby reduce an overall air drag/resistance of the vehicle combination 400 and e.g. reduce energy losses.

In one example, the control unit 250 may be configured to obtain data indicative of one or more current or upcoming corners of a road that is to be driven by the vehicle combination 400. Based on such data, the control unit 250 may command the (active) suspension element 240 to adjust an overall length of the drawbar 210 in the longitudinal direction L (by e.g. compression or elongation of the suspension element 240 in the longitudinal direction L), in order to improve cornering of the vehicle combination 400 in the one or more current or upcoming corners of the road.

In one example, the control unit 250 may be configured to determine or predict whether there are or will be longitudinally oscillatory relative movements between e.g. the trailer 404 and towing vehicle 402, e.g. oscillations in/of relative movements between the first and second end sections 220 and 230 in the longitudinal direction L of the drawbar 210. If affirmative, the control unit 250 may be further configured to control the (active) suspension element 240 to counteract such oscillations, for example by adjusting a spring and/or damping action of the suspension element 240. For example, if the oscillations are at or close to a current resonance frequency of the suspension element 240, the suspension element 240 can be controlled to alter its resonance frequency in order to avoid further strengthening (and preferably also reduce) oscillations.

In one example, the control unit 250 may be configured to determine (or obtain an indication of) an overall longitudinal acceleration of the vehicle combination (such as 400), and to estimate a mass of e.g. the trailer 404 based on the longitudinal acceleration and the estimated force exerted by the trailer 404. For example, with estimations of the force *F_{L}* and longitudinal acceleration *aₗ*, a trailer mass *mₜᵣₐᵢₗₑᵣ* may be obtained using Newton's second law as *mₜᵣₐᵢₗₑᵣ* = *F_{L}*/*aₗ,* or similar. Of course, this may not be that trivial if there are e.g. one or more other trailers connected behind the trailer 404, in case which e.g. estimations of forces exerted also by these one or more trailers, as well as e.g. estimations of their respective articulation angles, can also be considered in order to estimate the mass of a particular trailer.

In one example, in case e.g. the trailer 404 is an e-trailer, the control unit 250 may be configured to reduce a magnitude of the force *F_{L}* exerted by the trailer 404 on the towing vehicle 402 (and thereby the coupling force) by distributing acceleration (including also braking) requests between the e-trailer 404 and the towing vehicle 402. For example, if it is determined that the force *F_{L}* indicates that the trailer 404 is pushing on the drawbar 210 in an undesirable fashion, this may be resolved by e.g. accelerating the towing vehicle 402 and/or braking the trailer 404 until the force *F_{L}* (or at least the component *F_{L'}*) is reduced or even zero. Likewise, if it is determined that the force *F_{L}* indicates that the trailer 404 is pulling on the drawbar 210 in an undesirable fashion, this may be resolved by e.g. braking the towing vehicle 402 and/or accelerating the trailer 404, and similar. If there are multiple e-trailers in the vehicle combination 400 (or 401), such distribution of acceleration/braking requests may be performed for all such e-trailers, to reduce (and e.g. minimize) coupling forces between the various units of the vehicle combination.

Envisaged herein is also to provide e.g. a towing vehicle (such as 402) that includes the control unit 250, such that this towing vehicle may be used to together with a trailer equipped with the drawbar as envisaged herein. It is also envisaged to provide a vehicle combination (such as 400, 401) that includes a second vehicle unit (e.g. towing vehicle 402), a first vehicle unit (such as at least one trailer, such as 404 and/or 406), and a drawbar (such as 210) and control unit (250), or e.g. a drawbar arrangement (such as 200) as envisaged herein, coupling together the first and second vehicle units.

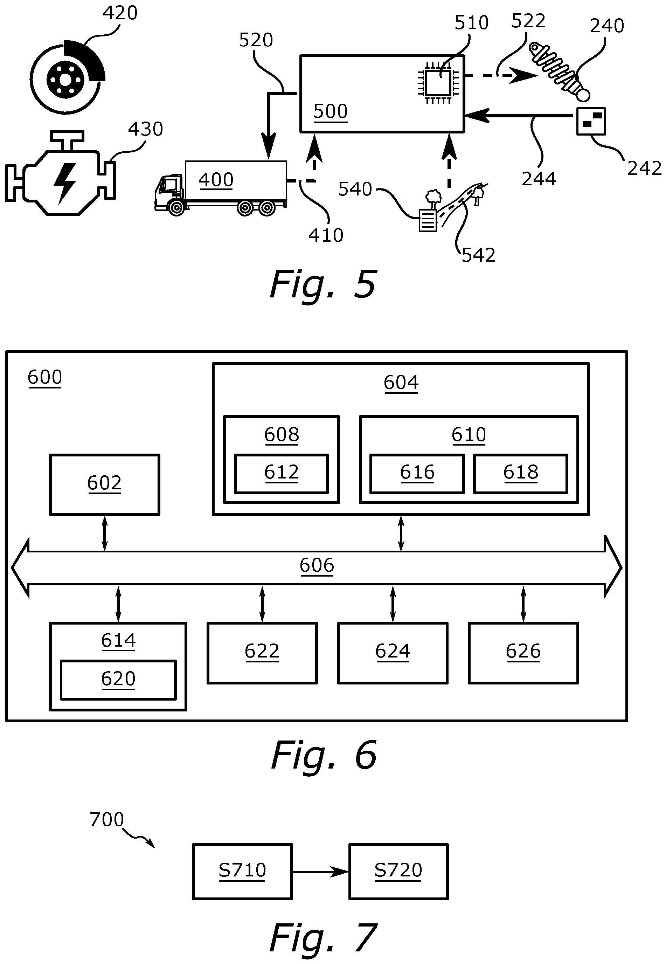

**FIG. 5** schematically illustrates an exemplary control unit 500 as envisaged herein on a more general level. The control unit 500 includes processing circuitry 510 configured to perform the various operations of the control unit 250 described herein. Phrased differently, the control unit 500 may e.g. be the control unit 250. The control unit 500 is configured to obtain readouts (via e.g. a message, such as a signal, measurement, data transfer, or similar, 244) from the one or more sensors 242, that may or may not form part of the drawbar 210 and/or suspension element 240. The control unit 500 is further configured to control the vehicle combination 400 based on the readouts 244, in order to improve a driving experience of the vehicle combination 400 as described and exemplified herein. This may be achieved by the control unit 500 controlling, via e.g. one or more control messages 520, one or more MSDs of the vehicle combination 400, including e.g. those found as part of a brake system 420 and/or propulsion system 430 of the vehicle combination 400, such as those in a towing vehicle and/or trailer of the vehicle combination 400.

If the suspension element 240 is an active suspension element, the control unit 500 may optionally be configured to control the active suspension 240, via e.g. one or more control messages 522.

In some examples, the control unit 500 may be further configured to obtain data 540 pertinent to a road 542 along which the vehicle combination 400 is to be driven, such as data about current or upcoming corners, slopes, road surfaces, climate, temperature or any other parameter that may be useful for improving the driving experience of the vehicle combination 400 based on the readouts 244 from the one or more sensors (i.e. based on knowledge about the force or forces exerted by the trailer or trailers of the vehicle combination 400).

**FIG. 6** is a schematic diagram of a computer system 600 for implementing examples disclosed herein, such as for implementing all or parts of the control unit 250. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**FIG. 7** schematically illustrates a flowchart of an exemplary method 700 for controlling a vehicle combination (such as 400), as performed e.g. by (processing circuitry of) the control unit 250/computer system 600. As part of an operation S710, the method 700 includes to obtain the readouts from the one or more sensors configured to sense the state of the suspension element of the drawbar coupling the first and second vehicle units of the vehicle combination together, wherein the state is indicative of the force (e.g. *F_{L}*) exerted by the first vehicle unit (on e.g. the drawbar). As part of an operation S720, the method 700 includes to control the vehicle combination (e.g. 400, 401) based on the readouts from the one or more sensors of the drawbar (or wherever these sensors are provided, as long as the sensors are capable of estimating the state indicative of the exerted force).

In summary of all of the above, the present disclosure improves upon currently available technology in that it provides a drawbar that includes a suspension element which connects the end sections and dampens movement of these two otherwise distinguished end sections of the drawbar in a longitudinal direction of the drawbar, and in particular by proposing to use one or more sensors capable of estimating a state indicative of a force exerted by e.g. a trailer (on e.g. the drawbar) using the drawbar and suspension element. By controlling the vehicle combination based on the estimated force exerted by the trailer, the driving experience can be made more comfortable, safe, and things like e.g. jack-knifing can actively be avoided or at least partially alleviated. By making the suspension element active, additional advantages may be obtained by active control of the suspension element.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:
Example 1: A drawbar (210) for coupling of two vehicle units (300, 402, 404, 406) of a heavy road vehicle combination (400, 401), including: a first end section (220) mountable to a first vehicle unit (300, 404, 406) of the vehicle units; a second end section (230) couplable a second vehicle unit (402, 404) of the vehicle units, and a suspension element (240) connecting the first and second end sections such that the first and second end sections are at least partially movable relative to each other along a longitudinal direction (L) of extension of the drawbar, wherein the suspension element is configured to provide damping of such relative movement.
Example 2: The drawbar of example 1, wherein the suspension element is an active suspension element in the form of an air suspension, gas-hydraulic suspension, magneto-rheological suspension and/or hydraulic suspension.
Example 3: The drawbar of example 1 or 2, further including one or more sensors (242) configured to sense a state of the suspension element indicative of a force (*F_{L}*) exerted by the first vehicle unit, and wherein the drawbar is connectable to a control unit to provide readouts from the one or more sensors.
Example 4: A control unit (250, 500, 600) for heavy road vehicle combination (210), configured to: obtain readouts from one or more sensors (242) configured to sense a state of a suspension element of a drawbar coupling together a first vehicle unit and a second vehicle unit of the vehicle combination, wherein said state is indicative of a longitudinal force (*F_{L}*) exerted by the first vehicle unit, and control the vehicle combination (400, 401) based on said readouts of the one or more sensors.
Example 5: The control unit of example 4, wherein the control unit is further configured to, as part of controlling the vehicle combination, control braking (420) and/or propulsion (430) of the vehicle combination based on said readouts from the one or more sensors.
Example 6: The control unit of example 5, wherein the control unit is further configured to obtain an indication of an articulation angle (*θ*) between the first and second vehicle units and, as part of controlling the vehicle combination, control the braking and/or propulsion of the vehicle combination based also on said articulation angle.
Example 7: The control unit of example 6, wherein the control unit is further configured to estimate respective longitudinal (*F_{L'}*) and lateral (*F_{T'}*) force components of a force exerted by the drawbar on the second vehicle unit based on said articulation angle and readouts of the one or more sensors, and to control the braking and/or propulsion of the vehicle combination based on said force components in order for at least one vehicle unit of the vehicle combination to stay within one or more tire slip limitations.
Example 8: The control unit of any one of examples 4 to 7, wherein the control unit is further configured to detect an imminent jack-knifing situation based on said readouts of the one or more sensors and, as part of controlling the vehicle combination, prepare the vehicle combination to avoid or at least alleviate said j ack-knifing situation during a delay of a force exerted on the second vehicle unit by the drawbar and caused by the suspension element.
Example 9: The control unit of example 8, wherein the suspension element is an active suspension element, and wherein the control unit is further configured to cause or extend said delay by commanding a compression or elongation of the active suspension element.
Example 10: The control unit of any one of examples 4 to 9, wherein the suspension element is an active suspension element, and wherein the control unit is further configured to, in response to determining that a current or predicted future speed of the vehicle combination exceeds a speed threshold, control the active suspension element to reduce an overall longitudinal length of the drawbar for thereby bringing the first and second vehicle units closer together.
Example 11: The control unit of any one of examples 4 to 10, wherein the suspension element is an active suspension element, and wherein the control unit is further configured to: obtain data (540) indicative of one or more current or upcoming corners of a road (542) to be driven along by the vehicle combination, and to control the active suspension element to adjust an overall longitudinal length of the drawbar in order to improve cornering of the vehicle combination in said one or more current or upcoming corners.
Example 12: The control unit of any one of examples 4 to 11, wherein the control unit is further configured to estimate a regenerative braking force capacity of the vehicle combination based on said readouts of the one or more sensors of the drawbar.
Example 13: The control unit of any one of examples 4 to 12, wherein the control unit is further configured to determine or predict current or future longitudinal oscillatory relative movements between the first and second vehicle units, and to control the active suspension element to counteract such oscillatory movements.
Example 14: The control unit of any one of examples 4 to 13, wherein the control unit is further configured to obtain an indication of an overall longitudinal acceleration of the vehicle combination, and to estimate a mass of the first vehicle unit on the longitudinal acceleration and said readouts of the one or more sensors.
Example 15: The control unit of any one of examples 4 to 14, wherein the first vehicle unit is an e-trailer, and wherein the control unit is further configured to reduce a magnitude of the force exerted by the e-trailer by distributing acceleration requests between the e-trailer and the second vehicle unit.
Example 16: A drawbar arrangement (200) for a heavy road vehicle combination (400, 401), including the drawbar of example 1 or 2, the control unit (250, 500, 600) of any one of examples 4 to 15, and one or more sensors configured to sense a state of the suspension element of the drawbar indicative of a force (*F_{L}*) exerted by the first vehicle unit.
Example 17: A heavy vehicle trailer (300, 404, 406), including the drawbar (210) of any one of examples 1 to 3.
Example 18: A heavy towing vehicle (402), including the control unit (250, 500, 600) of any one of examples 4 to 15.
Example 19: A heavy vehicle combination (400, 401), including: a first vehicle unit (404, 406); a second vehicle unit (402, 404), the control unit (250, 500, 600) of any one of examples 3 to 15, and the drawbar arrangement of example 16 coupling together the first and second vehicle units.
Example 20: The vehicle combination of example 19, wherein the control unit forms part of the second vehicle unit, such as a heavy towing vehicle

## Claims

1. A drawbar (210) for coupling of two vehicle units (300, 402, 404, 406) of a heavy road vehicle combination (400, 401), comprising:
- a first end section (220) mountable to a first vehicle unit (300, 404, 406) of the vehicle units;
- a second end section (230) couplable a second vehicle unit (402, 404) of the vehicle units, and
- a suspension element (240) connecting the first and second end sections such that the first and second end sections are at least partially movable relative to each other along a longitudinal direction (L) of extension of the drawbar, wherein the suspension element is configured to provide damping of such relative movement.

2. The drawbar of claim 1, wherein the suspension element is an active suspension element in the form of an air suspension, gas-hydraulic suspension, magneto-rheological suspension and/or hydraulic suspension.

3. The drawbar of claim 1 or 2, further comprising one or more sensors (242) configured to sense a state of the suspension element indicative of a force (*F_{L}*) exerted by the first vehicle unit, and wherein the drawbar is connectable to a control unit to provide readouts from the one or more sensors.

4. A control unit (250, 500, 600) for a heavy road vehicle combination (210), configured to:
- obtain readouts from one or more sensors (242) configured to sense a state of a suspension element of a drawbar coupling together a first vehicle unit and a second vehicle unit of the vehicle combination, wherein said state is indicative of a longitudinal force (*F_{L}*) exerted by the first vehicle unit, and
- control the vehicle combination (400, 401) based on said readouts of the one or more sensors.

5. The control unit of claim 4, wherein the control unit is further configured to, as part of controlling the vehicle combination, control braking (420) and/or propulsion (430) of the vehicle combination based on said readouts from the one or more sensors.

6. The control unit of claim 5, wherein the control unit is further configured to obtain an indication of an articulation angle (*θ*) between the first and second vehicle units and, as part of controlling the vehicle combination, control the braking and/or propulsion of the vehicle combination based also on said articulation angle.

7. The control unit of claim 6, wherein the control unit is further configured to estimate respective longitudinal (*F_{L'}*) and lateral (*F_{T'}*) force components of a force exerted by the drawbar on the second vehicle unit based on said articulation angle and readouts of the one or more sensors, and to control the braking and/or propulsion of the vehicle combination based on said force components in order for at least one vehicle unit of the vehicle combination to stay within one or more tire slip limitations.

8. The control unit of any one of claims 4 to 7, wherein the control unit is further configured to detect an imminent jack-knifing situation based on said readouts of the one or more sensors and, as part of controlling the vehicle combination, prepare the vehicle combination to avoid or at least alleviate said j ack-knifing situation during a delay of a force exerted on the second vehicle unit by the drawbar and caused by the suspension element.

9. The control unit of claim 8, wherein the suspension element is an active suspension element, and wherein the control unit is further configured to cause or extend said delay by commanding a compression or elongation of the active suspension element.

10. The control unit of any one of claims 4 to 9, wherein the suspension element is an active suspension element, and wherein the control unit is further configured to at least one of:
i) in response to determining that a current or predicted future speed of the vehicle combination exceeds a speed threshold, control the active suspension element to reduce an overall longitudinal length of the drawbar for thereby bringing the first and second vehicle units closer together, and
ii) obtain data (540) indicative of one or more current or upcoming corners of a road (542) to be driven along by the vehicle combination, and to control the active suspension element to adjust an overall longitudinal length of the drawbar in order to improve cornering of the vehicle combination in said one or more current or upcoming corners.

11. The control unit of any one of claims 4 to 10, wherein the control unit is further configured to determine or predict current or future longitudinal oscillatory relative movements between the first and second vehicle units, and to control the active suspension element to counteract such oscillatory movements.

12. A drawbar arrangement (200) for a heavy road vehicle combination (400, 401), comprising the drawbar of claim 1 or 2, the control unit (250, 500, 600) of any one of claims 4 to 11, and one or more sensors configured to sense a state of the suspension element of the drawbar indicative of a force (*F_{L}*) exerted by the first vehicle unit.

13. A heavy vehicle trailer (300, 404, 406), comprising the drawbar (210) of any one of claims 1 to 3.

14. A heavy towing vehicle (402), comprising the control unit (250, 500, 600) of any one of claims 4 to 11.

15. A heavy vehicle combination (400, 401), comprising:
- a first vehicle unit (404, 406);
- a second vehicle unit (402, 404),
- the drawbar arrangement of claim 12 coupling together the first and second vehicle units.

## Amended claims

### Amended claims in accordance with Rule 137(2) EPC.

1. A control unit (250, 500, 600) for a heavy road vehicle combination (210), configured to:
- obtain readouts from one or more sensors (242) configured to sense a state of an active suspension element of a drawbar coupling together a first vehicle unit and a second vehicle unit of the vehicle combination, wherein said state is indicative of a longitudinal force (*F_{L}*) exerted by the first vehicle unit, and
- control the vehicle combination (400, 401) based on said readouts of the one or more sensors,
wherein, as part of said control, the control unit is further configured to:
- detect an imminent jack-knifing situation based on said readouts of the one or more sensors;
- command a compression or elongation of the active suspension element to cause or extend a delay of a force exerted on the second vehicle unit by the drawbar, and
- prepare the vehicle combination to avoid or at least alleviate said jack-knifing situation during said delay.

2. The control unit of claim 1, wherein, to detect the imminent jack-knifing situation, the control unit is further configured to detect that the indicated longitudinal force exerted by the first vehicle unit exceeds a force threshold value.

3. The control unit of claim 1, wherein, to detect the imminent jack-knifing situation, the control unit is further configured to detect that a rate of change of the indicated longitudinal force exerted by the first vehicle unit exceeds a rate of change threshold value.

4. The control unit of claim 2 or 3, wherein, to detect the imminent jack-knifing situation, the control unit is further configured to take into account also an articulation angle (*θ*) between the first and second vehicle units.

5. The control unit of any one of the preceding claims, wherein, to prepare the vehicle combination to avoid or at least alleviate said jack-knifing situation during said delay, the control unit is configured to cause at least one of a braking of the vehicle combination, a slowing down of the vehicle combination and a steering of a towing vehicle of the vehicle combination.

6. The control unit of any one of the preceding claims, wherein the control unit is further configured to, as part of controlling the vehicle combination, control braking (420) and/or propulsion (430) of the vehicle combination based on said readouts from the one or more sensors.

7. The control unit of claim 6, wherein the control unit is further configured to obtain an indication of an articulation angle (*θ*) between the first and second vehicle units and, as part of controlling the vehicle combination, control the braking and/or propulsion of the vehicle combination based also on said articulation angle.

8. The control unit of claim 7, wherein the control unit is further configured to estimate respective longitudinal (*F_{L'}*) and lateral (*F_{T'}*) force components of a force exerted by the drawbar on the second vehicle unit based on said articulation angle and readouts of the one or more sensors, and to control the braking and/or propulsion of the vehicle combination based on said force components in order for at least one vehicle unit of the vehicle combination to stay within one or more tire slip limitations.

9. The control unit of any one of the preceding claims, wherein the control unit is further configured to at least one of:
i) in response to determining that a current or predicted future speed of the vehicle combination exceeds a speed threshold, control the active suspension element to reduce an overall longitudinal length of the drawbar for thereby bringing the first and second vehicle units closer together, and
ii) obtain data (540) indicative of one or more current or upcoming corners of a road (542) to be driven along by the vehicle combination, and to control the active suspension element to adjust an overall longitudinal length of the drawbar in order to improve cornering of the vehicle combination in said one or more current or upcoming corners.

10. The control unit of any one of the preceding claims, wherein the control unit is further configured to determine or predict current or future longitudinal oscillatory relative movements between the first and second vehicle units, and to control the active suspension element to counteract such oscillatory movements.

11. A drawbar arrangement (200) for a heavy road vehicle combination (400, 401), comprising:
- the control unit (250, 500, 600) of any one of claims 1 to 10;
- the drawbar (210) for coupling of the first vehicle unit (300, 404, 406) and the second vehicle unit (402, 404) of the vehicle combination, and
- the one or more sensors (242) configured to sense the state of the active suspension element of the drawbar.

12. A heavy towing vehicle (402), comprising the control unit (250, 500, 600) of any one of claims 1 to 10, wherein the vehicle is the second vehicle unit.

13. A heavy vehicle combination (400, 401), comprising:
- the drawbar arrangement of claim 11;
- the first vehicle unit (404, 406), and
- the second vehicle unit (402, 404).
